# DEMANDE DE BREVET EUROPEEN

(11) **EP 0 762 100 A1**
(43) Date de publication de la demande: **12.03.1997**
(21) Numéro de dépôt: 96401869.1
(22) Date de dépôt: 02.09.1996
(51) Int. Cl.: G01M 3/20, G01M 3/38

(54) **Procédé de détection de fuites potentielles de fluide, notamment de gaz, sur un tube d'amortisseur hydraulique pressurisé**

(30) Priorité: 07.09.1995 FR 9510494
(71) Demandeur: SOCIETE FRANCAISE DES AMORTISSEURS DE CARBON, F-27430 Saint Pierre du Vauvray (FR)
(72) Inventeur: Salou, Alain, 75018 Paris (FR)
(74) Mandataire: Casalonga, Axel

(57) **Abrégé**

On pulvérise (21) sur les parois internes du tube vide, un film d'un liquide lubrifiant osmotique compatible avec le liquide d'amortissement et détectable à l'extérieur du tube on procède à l'équipement interne du tube ainsi pulvérisé et on détecte (23) une fuite potentielle de gaz en détectant une présence de liquide osmotique à l'extérieur du tube équipé.

## Description

L'invention concerne la détection de fuites potentielles de fluide sur un tube d'amortisseur hydraulique, et plus particulièrement la détection de fuites potentielles de gaz d'un tube d'amortisseur hydraulique du type monotube pressurisé.

Un tube d'amortisseur hydraulique monotube pressurisé est séparé en deux portions par un piston séparateur gaz/liquide, ou diaphragme, monté libre à coulissement dans le tube et muni d'un joint torique d'étanchéité. Une portion du tube contient un gaz sous pression, typiquement de l'azote, et l'autre portion est remplie de liquide hydraulique d'amortissement, tel que de l'huile.

Le gaz sous pression évite ainsi tout problème de cavitation et contribue à l'obtention de la loi d'amortissement désirée.

Cette quantité de gaz est obtenue par exemple à partir d'une quantité d'azote liquide versée au fond du tube après que les parois internes de celui-ci aient été pulvérisées avec un film d'huile d'amortissement de façon à permettre la mise en place aisée du diaphragme.

Or, il arrive parfois que la quantité de gaz capturée s'échappe par des micro-fissures du tube de l'amortisseur, en particulier au niveau de la soudure entre l'extrémité du tube et l'oeillet de fixation sur la roue. Cette fuite de gaz est préjudiciable au bon fonctionnement de l'amortisseur.

Une telle fuite potentielle de gaz peut être détectée en contrôlant systématiquement les tubes vides à partir d'un test à l'hélium ou avec un autre gaz permettant d'identifier des micro-fuites et donc la présence de micro-fissures. Cependant, cette méthode de test à partir d'un traceur gazeux a pour inconvénient d'alourdir le procédé d'assemblage des amortisseurs par des contrôles supplémentaires coûteux.

L'invention vise à apporter une solution radicalement différente à ce problème.

Un but de l'invention est de proposer un test efficace d'étanchéité sur un amortisseur assemblé (ou "bouclé" selon un terme habituellement utilisé par l'homme du métier) qui puisse facilement être inséré dans le flux de fabrication existant, dès les premiers instants, et avant livraison.

L'invention propose donc un procédé de détection de fuites potentielles de fluide sur un tube d'amortisseur hydraulique pressurisé contenant du gaz et du liquide d'amortissement. Selon ce procédé on pulvérise sur les parois internes du tube vide, un film d'un liquide lubrifiant osmotique compatible avec le liquide d'amortissement et détectable à l'extérieur du tube. On procède à l'équipement interne du tube ainsi pulvérisé (gaz, liquide d'amortissement, et constituants mécaniques internes du tube), et on détecte une fuite potentielle de gaz en détectant une présence de liquide osmotique à l'extérieur du tube équipé.

Le liquide pulvérisé est lubrifiant pour permettre l'insertion aisée du diaphragme dans le tube après déversement de l'azote liquide au fond de celui-ci. Ce liquide lubrifiant doit être compatible avec le liquide d'amortissement c'est-à-dire qu'il ne doit pas détruire les propriétés physiques de ce dernier.

Par ailleurs, au sens de la présente invention, un liquide "osmotique" est un liquide capable de traverser par capillarité des micro-fissures éventuelles d'une paroi d'un tube d'amortisseur. Puisque ce liquide osmotique est par ailleurs détectable à l'extérieur du tube, par exemple par visualisation optique, sa détection éventuelle permet ainsi de détecter la présence d'une micro-fissure dans la paroi du tube de l'amortisseur laissant prévoir une fuite potentielle de gaz si cette micro-fissure se situe au niveau de la portion gazeuse de l'amortisseur.

Ainsi, l'invention est remarquable en ce sens qu'elle permet la détection de fuites potentielles de gaz, non pas en utilisant un gaz traceur pour cette détection, mais en détectant une fuite de liquide. En d'autres termes, l'invention transpose la détection d'une fuite de gaz en une détection de fuite de liquide.

L'invention présente ainsi l'avantage considérable de pouvoir détecter des tubes d'amortisseur dits "fuyards" qui peuvent ne pas fuir au gaz pendant plusieurs semaines après leur bouclage, voire plusieurs mois, puis "se dégonfler" brusquement. En effet, le lubrifiant pulvérisé peut, pendant un certain laps de temps, boucher l'entrée des micro-fissures empêchant ainsi provisoirement la fuite du gaz. Ce n'est seulement qu'après expulsion des résidus de pulvérisation que le gaz peut fuir par la micro-fissure. Cependant, même si le lubrifiant pulvérisé empêche provisoirement la fuite du gaz, il humidifie néanmoins par capillarité l'intérieur de la micro-fissure pour suinter à l'extérieur du tube. La détection de ce suintement externe permet ainsi de repérer dès sa fabrication un amortisseur potentiellement fuyard.

Il est particulièrement avantageux que le liquide lubrifiant osmotique comporte du liquide d'amortissement ce qui offre la garantie de compatibilité évoquée ci-dessus.

Afin de faciliter la détection de la présence éventuelle de liquide osmotique à l'extérieur du tube équipé, qui lors de l'assemblage ou bouclage de l'amortisseur, présente généralement des résidus graisseux sur les parois externes, il est préférable que ce liquide osmotique comporte un mélange de liquide d'amortissement et d'un colorant compatible avec ce liquide d'amortissement. Au sens de la présente invention, un colorant compatible est alors un colorant ne détruisant pas les propriétés physiques du liquide ou huile d'amortissement et formant avec celui-ci un mélange homogène c'est-à-dire ne présentant pas de phases distinctes.

On peut par exemple utiliser un colorant fluorescent, tel que de la fluorescéine. La détection de la présence éventuelle du liquide osmotique à l'extérieur du tube peut alors se faire optiquement à partir d'un rayonnement ultraviolet.

D'autres avantages et caractéristiques de l'invention apparaîtront à l'examen de la description détaillée d'un mode de mise en oeuvre, nullement limitatif, et des dessins annexés sur lesquels :
- la figure 1 est une coupe longitudinale schématique d'un tube d'amortisseur monotube pressurisé, et
- la figure 2 est un organigramme schématique d'un mode de mise en oeuvre du procédé selon l'invention.

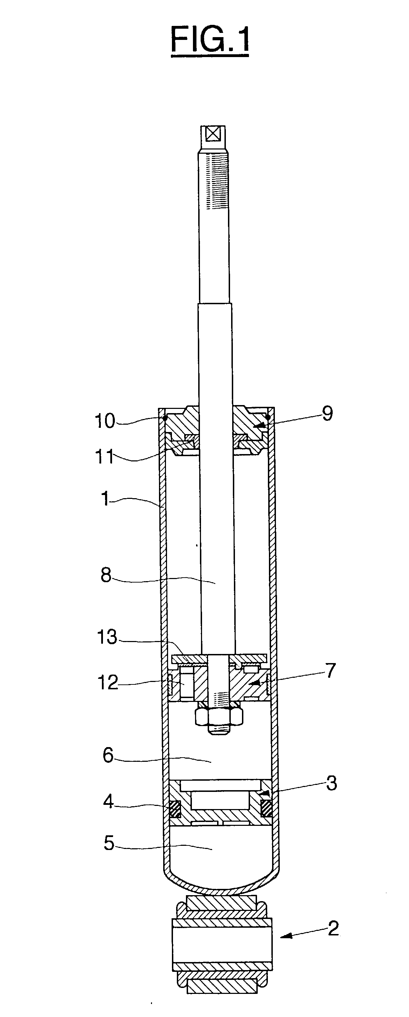

Tel qu'il est illustré sur la figure 1, l'amortisseur hydraulique télescopique monotube comprend un cylindre ou tube 1 fixé à l'une de ses extrémités par un oeillet 2. Un piston séparateur gaz/liquide, ou diaphragme 3, monté libre à coulissement dans le cylindre 1, est muni d'un joint torique d'étanchéité 4 et sépare le cylindre en deux portions. Une portion 5 contient un gaz sous pression, typiquement de l'azote, et l'autre portion est rempli d'un liquide hydraulique d'amortissement, typiquement de l'huile par exemple celle commercialisée par la société ESSO sous la référence ESSOR 22 ou ESSOR 23.

Un autre piston 7 est fixé à l'extrémité d'une tige 8 dont le déplacement dans le cylindre 1 est guidé par un guide ou obturateur 9, fixé au cylindre par des moyens de fixation 10 et associé à un joint d'étanchéité dynamique 11.

L'extrémité supérieure de la tige 8 est fixée à un goujon de fixation.

Pour assurer le fonctionnement de l'amortisseur, le piston 7 comporte des passages permanents 12 pour le liquide hydraulique, coopérant avec un clapet 13, généralement un clapet flottant.

C'est généralement au niveau de la soudure entre l'oeillet et le bas du tube 1 que peuvent apparaîtrent des micro-fissures par lesquels pourra s'échapper l'azote gazeux. Ceci étant, notamment lorsque le fond du tube est rapporté, les micro-fissures peuvent également apparaître au niveau des soudures du fond de tube rapporté.

Le procédé de montage classique d'un tel amortisseur comporte tout d'abord une pulvérisation d'un film d'huile d'amortissement sur les parois internes du tube vide puis un remplissage du fond de ce tube par une quantité prédéterminée d'azote liquide qui, ultérieurement après élévation de la température, va se transformer en azote gazeux. Le liquide d'amortissement pulvérisé permet ensuite l'introduction à coulissement du diaphragme dans le tube de façon que sa face inférieure vienne en contact avec l'azote liquide. Puis, on procède au bouclage complet de l'amortisseur, sous presse, en le remplissant d'huile d'amortissement, en mettant en place la tige équipée du piston 7 et en obturant l'extrémité supérieure du tube par le guide 9.

Avant d'être peint, l'amortisseur est alors soumis à des tests (communément appelés par l'homme du métier tests de SCHENCK) permettant la vérification de la loi d'amortissement effort/vitesse, c'est-à-dire que l'on mesure l'effort exercé sur l'amortisseur en fonction de la vitesse de débattement du piston à clapet dans le tube.

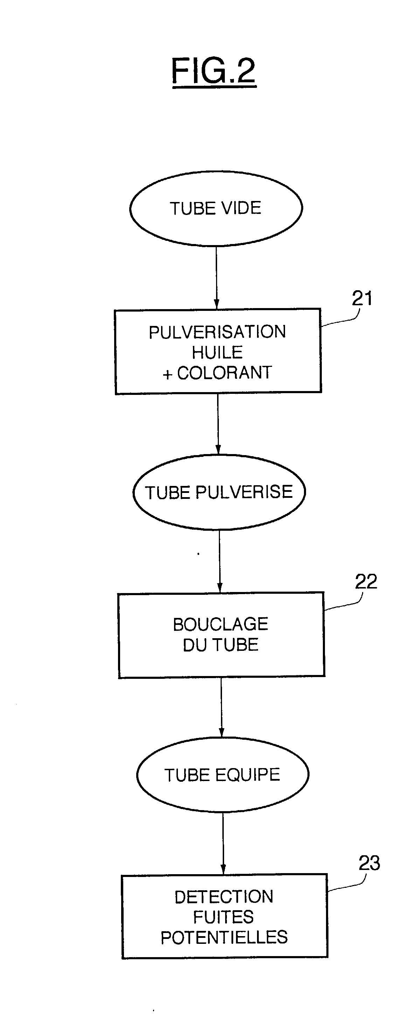

Selon un mode préféré de mise en oeuvre de l'invention, on rajoute à l'huile d'amortissement, par exemple ESSOR 22 ou ESSOR 23, destinée à être pulvérisée sur les parois internes du tube vide, de la fluorescéine en une concentration choisie. C'est donc ce mélange lubrifiant et parfaitement homogène huile-fluorescéine qui va être pulvérisé sur les parois internes du tube vide (étape 21 figure 2). Bien qu'une concentration de fluorescéine de 1% en volume ait donné des résultats satisfaisants, tant que sur le plan de la détection que sur le plan de la compatibilité avec l'huile d'amortissement, il s'avère que cette concentration de fluorescéine peut être différente, par exemple comprise entre 0,5 % et 3% en volume. En deçà de 0,5%, la détection, quoique toujours possible, devient plus délicate. Au-delà de 3%, les qualités lubrifiantes du mélange peuvent devenir moins bonnes.

Le bouclage de l'amortisseur (remplissage d'azote, mise en place du diaphragme, remplissage de l'huile d'amortissement et mise en place du piston à clapet et de l'obturateur) est alors effectué de façon classique (étape 22) comme décrit ci-avant. Puis le test effort-vitesse est effectué sur le tube ainsi équipé.

Bien qu'il soit possible de procéder (étape 23) au test de détection de la présence éventuelle du mélange pulvérisé huile d'amortissement-fluorescéine à l'extérieur du tube, par exemple avant d'effectuer le test effort-vitesse, ou bien après ce test au cours de l'une quelconque des étapes restantes de fabrication avant livraison, il s'avère préférable d'effectuer ce test de détection simultanément à ce test effort-vitesse.

En effet, si aucune présence d'un tel mélange n'est détecté à l'extérieur du tube, cela signifie soit qu'il n'existe aucune micro-fissure dans le tube, soit qu'il existe une micro-fissure mais que celle-ci est trop petite pour permettre une fuite éventuelle de gaz à chaud comme à froid. Si au contraire, une micro-fissure est d'une taille supérieure à une taille prédéterminée, il y aura fuite de gaz même à froid, c'est-à-dire même lorsque l'amortisseur n'est pas en fonctionnement. Si par contre la taille de la micro-fissure présente une taille intermédiaire, sa détection est facilitée lors d'un test à chaud, c'est-à-dire en fonctionnement, en raison de la diminution de la viscosité du mélange fluorescent.

Cette détection de mélange huile-fluorescéine peut s'effectuer très simplement en illuminant le tube par un rayonnement ultraviolet émis par toute source appropriée, par exemple une lampe de Wood. Une fluorescence visible à l'extérieur du tube permet alors de détecter la présence d'une micro-fissure et donc la présence d'une fuite potentielle de gaz.

Simultanément à cette détection de fuites potentielles de gaz, l'invention permet également de détecter un défaut d'étanchéité au niveau du joint dynamique 11, c'est-à-dire de détecter une fuite de liquide d'amortissement. A cet effet, il convient de rajouter du colorant fluorescent non seulement dans l'huile de pulvérisation, mais également dans le liquide d'amortissement qui remplit la partie supérieure du tube.

## Revendications

1. Procédé de détection de fuites potentielles de fluide sur un tube d'amortisseur hydraulique pressurisé contenant du gaz (5) et du liquide d'amortissement (6), dans lequel on pulvérise (21) sur les parois internes du tube vide (1), un film d'un liquide lubrifiant osmotique compatible avec le liquide d'amortissement (6) et détectable à l'extérieur du tube, on procède à l'équipement interne du tube ainsi pulvérisé et on détecte (23) une fuite potentielle de gaz (5) en détectant une présence de liquide osmotique à l'extérieur du tube équipé.

2. Procédé selon la revendication 1, caractérisé par le fait que le liquide lubrifiant osmotique comporte du liquide d'amortissement (6).

3. Procédé selon la revendication 1 ou 2, caractérisé par le fait que le liquide osmotique est un mélange de liquide d'amortissement (6) et d'un colorant compatible avec ledit liquide d'amortissement.

4. Procédé selon la revendication 3, caractérisé par le fait que le colorant est un colorant fluorescent et par le fait qu'on détecte la présence du liquide osmotique à partir d'un rayonnement ultra-violet.

5. Procédé selon la revendication 4, caractérisé par le fait que le colorant est de la fluorescéine en une concentration choisie.

6. Procédé selon la revendication 4 ou 5, dans lequel l'étape d'équipement interne du tube (1) comprend une étape de remplissage d'une partie du tube par le liquide d'amortissement (6), et une étape d'obturation du tube par un dispositif d'obturation (9), caractérisé par le fait que dans ladite étape de remplissage, on rajoute ledit colorant fluorescent dans le liquide d'amortissement (6), et on détecte une fuite éventuelle de liquide d'amortissement (6) au niveau du dispositif d'obturation (9) à partir d'un rayonnement ultra-violet.

7. Procédé selon l'une des revendications précédentes, caractérisé par le fait que l'on effectue la détection de fuite potentielle de fluide lors d'un test de fonctionnement de l'amortisseur.

8. Utilisation d'un colorant fluorescent, par exemple de la fluorescéine, pour la détection optique par rayonnement ultra-violet, de la présence à l'extérieur d'un tube d'amortisseur hydraulique pressurisé, en particulier un amortisseur monotube, d'un liquide lubrifiant osmotique compatible avec le liquide d'amortissement de l'amortisseur, pour la détection d'une fuite potentielle de gaz sur ledit tube.
